# EUROPEAN PATENT APPLICATION

(11) **EP 3 644 117 A1**
(43) Date of publication of application: **29.04.2020**
(21) Application number: 17920886.3
(22) Date of filing: 11.08.2017
(51) Int. Cl.: G02F 1/1339, G02F 1/1333

(54) **DISPLAY PANEL, MANUFACTURING METHOD THEREFOR, DISPLAY DEVICE AND TERMINAL**

(71) Applicant: Huawei Technologies Co., Ltd., Longgang District Shenzhen, Guangdong 518129 (CN)
(72) Inventor: WEI, Shanshan, Shenzhen Guangdong 518129 (CN); LI, Jianhui, Shenzhen Guangdong 518129 (CN); LIU, Taixiang, Shenzhen Guangdong 518129 (CN)
(74) Representative: Maiwald Patent- und Rechtsanwaltsgesellschaft mbH
(86) International application number: PCT/CN2017/097049
(87) International publication number: WO 2019/028822

(57) **Abstract**

A display panel and a manufacturing method thereof, and a display apparatus are provided. The display panel includes: an array substrate (10) and a color film substrate (20) that are disposed opposite to each other; liquid crystal molecules located between the array substrate (10) and the color film substrate (20); and a sealing structure (30) sealing the liquid crystal molecules, where the sealing structure (30) is at least partially located on sides of the array substrate (10) and the color film substrate (20). The sealing structure (30) sealing the liquid crystal molecules is at least partially disposed on the sides of the array substrate (10) and the color film substrate (20), to reduce an area of the sealing structure (30) between the array substrate (10) and the color film substrate (20) while ensuring sealability of the sealing structure (30). In this way, a black border area between the array substrate (10) and the color film substrate (20) is narrowed while ensuring the sealability of the sealing structure (30), thereby further implementing a narrow frame, and increasing an area of a display area on the display panel of a same size.

## Description

### TECHNICAL FIELD

This application relates to the field of display technologies, and in particular, to a display panel and a manufacturing method thereof, a display apparatus, and a terminal.

### BACKGROUND

As display technologies develop, a growing number of large-screen display apparatuses are applied in people's daily life. How to narrow a frame area of a display apparatus to increase an area of a display area on the display apparatus of a same size becomes a technical problem to be resolved by a person skilled in the art.

At present, a frame sealant on the display apparatus is located between an array substrate and a color film substrate of the display apparatus. After years of development, a narrow frame display technology for the display apparatus is relatively mature. On an excellent display apparatus, a frame area between the array substrate and the color film substrate can be a 0.6 mm black border, of which 0.4 mm is a width of the frame sealant. However, because of a limited adhesion ability of the frame sealant, if the width of the frame sealant is further reduced, sealability of the frame sealant is affected. Consequently, liquid crystal molecules in the display apparatus leak, and water vapor in an ambient environment invades the interior of the display apparatus. This affects normal display of the display apparatus.

Therefore, how to reduce the width of the frame sealant between the array substrate and the color film substrate while ensuring the sealability of the frame sealant becomes a bottleneck of a narrow frame study.

### SUMMARY

According to a first aspect, an embodiment of this application provides a display panel, including: an array substrate and a color film substrate that are disposed opposite to each other; liquid crystal molecules located between the array substrate and the color film substrate; and a sealing structure sealing the liquid crystal molecules, where the sealing structure is at least partially located on sides of the array substrate and the color film substrate.

According to the display panel provided in this embodiment of this application, the sealing structure sealing the liquid crystal molecules is at least partially disposed on the sides of the array substrate and the color film substrate, to reduce an area of the sealing structure between the array substrate and the color film substrate while ensuring sealability of the sealing structure. In this way, a black border area between the array substrate and the color film substrate is narrowed while ensuring the sealability of the sealing structure, thereby further implementing a narrow frame, and increasing an area of a display area on the display panel of a same size.

In an implementation, the sealing structure is located only on the sides of the array substrate and the color film substrate, to minimize the area of the sealing structure between the array substrate and the color film substrate while ensuring sealability of the frame sealant. In this way, the black border area between the array substrate and the color film substrate is minimized while ensuring the sealability of the sealing structure, thereby implementing a narrow frame to a greatest extent, and increasing the area of the display area on the display panel of the same size.

In an implementation, the sealing structure is partially located on the sides of the array substrate and the color film substrate, and partially located on a frame area between the array substrate and the color film substrate.

According to a second aspect, an embodiment of this application provides a display apparatus, including: an array substrate and a color film substrate that are disposed opposite to each other; liquid crystal molecules located between the array substrate and the color film substrate; a sealing structure sealing the liquid crystal molecules, where the sealing structure is at least partially located on sides of the array substrate and the color film substrate; and a backlight module located on a side that is of the array substrate and that faces away from the color film substrate.

According to the display apparatus provided in this embodiment of this application, the sealing structure sealing the liquid crystal molecules is at least partially disposed on the sides of the array substrate and the color film substrate, to reduce an area of the sealing structure between the array substrate and the color film substrate while ensuring sealability of the sealing structure. In this way, a black border area between the array substrate and the color film substrate is narrowed while ensuring the sealability of the sealing structure, thereby further implementing a narrow frame, and increasing an area of a display area on the display apparatus of a same size.

In an implementation, the sealing structure is located only on the sides of the array substrate and the color film substrate, to minimize the area of the sealing structure between the array substrate and the color film substrate while ensuring sealability of the frame sealant. In this way, the black border area between the array substrate and the color film substrate is minimized while ensuring the sealability of the sealing structure, thereby implementing a narrow frame to a greatest extend, and increasing an area of a display area on a display panel of a same size.

In an implementation, the sealing structure is partially located on the sides of the array substrate and the color film substrate, and partially located on a frame area between the array substrate and the color film substrate.

In an implementation, the display apparatus further includes a first securing structure that is located on a side of the backlight module and that securely connects the backlight module and the array substrate.

In an implementation, in a direction perpendicular to the color film substrate and the array substrate, a projection of a part that is of the sealing structure and that is located on the sides of the array substrate and the color film substrate at least partially overlaps a projection of the first securing structure. In this way, a space above the first securing structure is partially utilized to narrow the black border area on the display apparatus, and reduce a size of a frame area on a housing of the display apparatus.

In an implementation, in a direction parallel to the color film substrate and the array substrate, the projection of the first securing structure completely covers the projection of the part that is of the sealing structure and that is located on the sides of the array substrate and the color film substrate. In this way, the space above the first securing structure is fully utilized to narrow the black border area on the display apparatus without increasing the size of the frame area on the apparatus housing of the display apparatus.

In an implementation, the display apparatus further includes:
a first polarizer disposed between the array substrate and the backlight module, a second polarizer disposed on a side that is of the color film substrate and that faces away from the array substrate, a cover disposed on a side that is of the second polarizer and that faces away from the color film substrate, an apparatus housing that forms a sealed space with the cover, and a second securing structure that securely connects the cover and the apparatus housing, where
the sealed space is used to accommodate the backlight module, the array substrate, and the color film substrate, and an air gap exists between the apparatus housing and a side that is of the backlight module and that faces away from the array substrate.

In an implementation, the second securing structure is located between a side wall of the cover and a side wall of the apparatus housing, and securely connects the side wall of the cover and the side wall of the apparatus housing.

In an implementation, a support structure is disposed in the gap between the backlight module and the apparatus housing.

In an implementation, the support structure is a foam adhesive.

In an implementation, an end surface on a side that is of the apparatus housing and that faces the cover is a surface of a step; and the second securing structure is located at the step, and securely connects the cover and the apparatus housing.

According to a third aspect, an embodiment of this application further provides a terminal including the display apparatus according to any one of the foregoing implementations.

According to a fourth aspect, an embodiment of this application provides a display panel manufacturing method, and the method includes:
forming a first frame sealant on a frame area of an array substrate and/or a frame area of a color film substrate before bonding the array substrate and the color film substrate;
bonding the array substrate and the color film substrate on a side on which the first frame sealant is formed, and curing the first frame sealant to form a part that is of the sealing structure and that is located between the array substrate and the color film substrate; and
forming a second frame sealant on sides of the array substrate and the color film substrate, and curing the second frame sealant to form a part that is of the sealing structure and that is located on the sides of the array substrate and the color film substrate.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may derive other accompanying drawings from these accompanying drawings without creative efforts.
FIG. 1 is a partial schematic structural diagram of a display panel according to an embodiment of this application;
FIG. 2 is a partial schematic structural diagram of a display panel according to another embodiment of this application;
FIG. 3 is a partial schematic structural diagram of a display apparatus according to an embodiment of this application; and
FIG. 4 is a partial schematic structural diagram of a display apparatus according to another embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

In the following descriptions, many specific details are described to facilitate full understanding of this application. However, this application may alternatively be implemented in another manner different from that described herein, and a person skilled in the art may make similar promotion without violating a connotation of this application. Therefore, this application is not limited to the specific embodiments disclosed below.

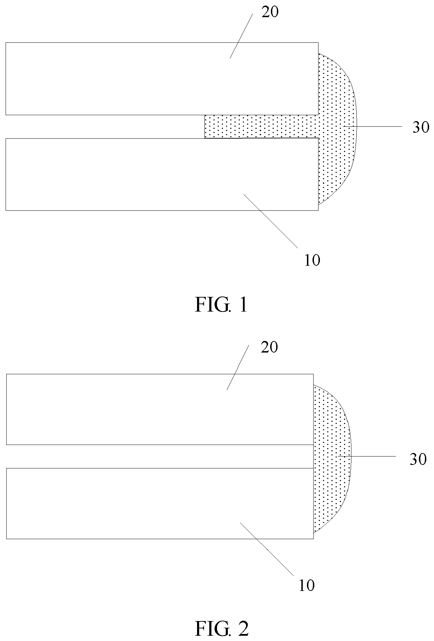

An embodiment of this application provides a display panel. As shown in FIG. 1, the display panel includes: an array substrate 10 and a color film substrate 20 that are disposed opposite to each other; liquid crystal molecules (not shown in the figure) located between the array substrate 10 and the color film substrate 20; and a sealing structure 30 sealing the liquid crystal molecules, where the sealing structure 30 is at least partially located on sides of the array substrate 10 and the color film substrate 20.

According to the display panel provided in this embodiment of this application, the sealing structure 30 sealing the liquid crystal molecules is at least partially disposed on the sides of the array substrate 10 and the color film substrate 20, to reduce a length of the sealing structure 30 between the array substrate 10 and the color film substrate 20 while ensuring sealability of the sealing structure 30. In this way, the sealability of the sealing structure 30 is ensured, and a black border area between the array substrate 10 and the color film substrate 20 is further narrowed, thereby implementing a narrow frame, and increasing an area of a display area on the display panel of a same size.

Based on the foregoing embodiment, in an embodiment of this application, as shown in FIG. 2, the sealing structure 30 is located only on the sides of the array substrate and the color film substrate 20, to minimize an area of the sealing structure 30 between the array substrate 10 and the color film substrate 20 while ensuring sealability of the frame sealant. In this way, the black border area between the array substrate 10 and the color film substrate 20 is minimized while ensuring the sealability of the sealing structure 30, thereby implementing a narrow frame, and increasing the area of the display area on the display panel of the same size.

In another embodiment of this application, as shown in FIG. 1, the sealing structure 30 is partially located on the sides of the array substrate 10 and the color film substrate 20, and partially located on a frame area between the array substrate 10 and the color film substrate 20. However, this is not limited in this application and specifically depends on a situation.

Correspondingly, this embodiment of this application further provides a display panel manufacturing method. In an example in which the sealing structure 30 is partially located on the sides of the array substrate 10 and the color film substrate 20, and partially located between the array substrate 10 and the color film substrate 20, the manufacturing method in this embodiment of this application includes the following steps.

S101. Form a first frame sealant on a frame area of the array substrate 10 and/or a frame area of the color film substrate 20 before bonding the array substrate 10 and the color film substrate 20. Specifically, in an embodiment of this application, the forming a first frame sealant on a frame area of the array substrate 10 and/or a frame area of the color film substrate 20 includes: using an adhesive dispenser to apply adhesive on the frame area of the array substrate 10 and/or the frame area of the color film substrate 20, to form the first frame sealant.

S102. Bond the array substrate 10 and the color film substrate 20 on a side on which the first frame sealant is formed, and cure the first frame sealant to form a part that is of the sealing structure 30 and that is located between the array substrate 10 and the color film substrate 20.

It should be noted that, in this embodiment of this application, a liquid crystal layer including liquid crystal molecules is further formed between the array substrate 10 and the color film substrate 20. In an embodiment of this application, forming the liquid crystal layer includes: before bonding the array substrate 10 and the color film substrate 20, instilling liquid crystals into an area enclosed by the first frame sealant on a surface of the array substrate 10 (or the color film substrate 20) to form the liquid crystal layer; and then bonding the array substrate 10 and the color film substrate 20 in a vacuum environment, and performing high-temperature curing. In another embodiment of this application, forming the liquid crystal layer includes: after bonding the array substrate 10 and the color film substrate 20 on the side on which the first frame sealant is formed, and curing the first frame sealant, pouring liquid crystals into a space enclosed by the first frame sealant, the array substrate, and the color film substrate to form the liquid crystal layer, and then performing sealing. This is not limited in this application and specifically depends on a situation.

S103. Form a second frame sealant on the sides of the array substrate 10 and the color film substrate 20, and cure the second frame sealant to form a part that is of the sealing structure 30 and that is located on the sides of the array substrate 10 and the color film substrate 20.

It should be noted that, when the display panel is used for mass production, step S102 is performed before a large display panel is cut into a display panel unit, and step S103 is performed after the large display panel is cut into the display panel unit, where one display panel unit corresponds to one display apparatus.

It can be learned from the foregoing description that, according to the display panel and the manufacturing method thereof that are provided in this embodiment of this application, the sealing structure 30 sealing the liquid crystal molecules is at least partially disposed on the sides of the array substrate 10 and the color film substrate 20, to reduce the length of the sealing structure 30 between the array substrate 10 and the color film substrate 20 while ensuring the sealability of the sealing structure 30. In this way, the sealability of the sealing structure 30 is ensured, and the black border area between the array substrate 10 and the color film substrate 20 is further narrowed, thereby implementing a narrow frame, and increasing the area of the display area on the display panel of the same size.

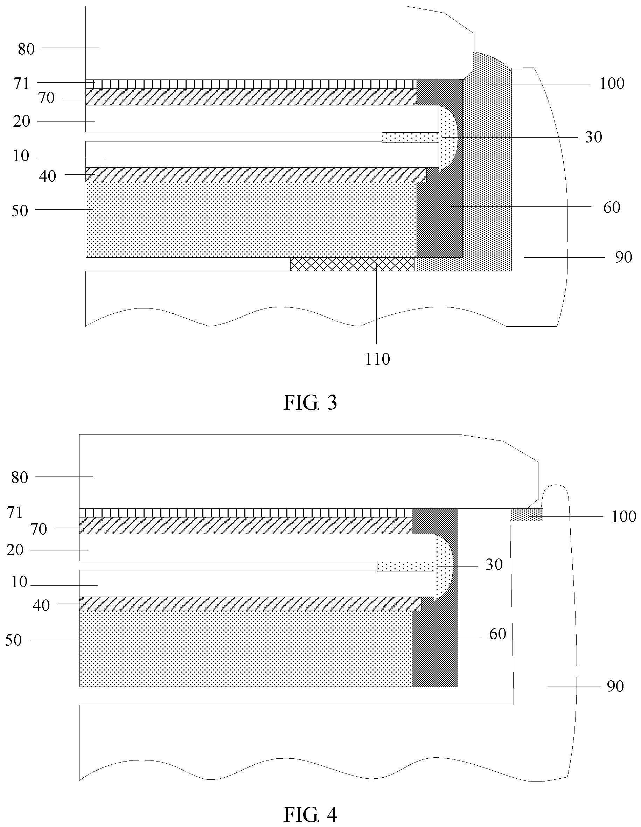

In addition, an embodiment of this application further provides a display apparatus. As shown in FIG. 3, the display apparatus includes:
an array substrate 10 and a color film substrate 20 that are disposed opposite to each other;
liquid crystal molecules (not shown in the figure) located between the array substrate 10 and the color film substrate 20;
a sealing structure 30 sealing the liquid crystal molecules, where the sealing structure 30 is at least partially located on sides of the array substrate 10 and the color film substrate 20; and
a backlight module 50 located on a side that is of the array substrate 10 and that faces away from the color film substrate.

According to the display apparatus provided in this embodiment of this application, the sealing structure 30 sealing the liquid crystal molecules is at least partially disposed on the sides of the array substrate 10 and the color film substrate 20, to reduce a length of the sealing structure 30 between the array substrate 10 and the color film substrate 20 while ensuring sealability of the sealing structure 30. In this way, the sealability of the sealing structure 30 is ensured, and a black border area between the array substrate 10 and the color film substrate 20 is further narrowed, thereby implementing a narrow frame, and increasing an area of a display area on the display apparatus of a same size.

Based on the foregoing embodiment, in an embodiment of this application, the sealing structure 30 is located only on the sides of the array substrate and the color film substrate 20, to minimize an area of the sealing structure 30 between the array substrate 10 and the color film substrate 20 while ensuring sealability of the frame sealant. In this way, the black border area between the array substrate 10 and the color film substrate 20 is minimized while ensuring the sealability of the sealing structure 30, thereby implementing a narrow frame, and increasing an area of a display area on the display apparatus of the same size. In another embodiment of this application, the sealing structure 30 is partially located on the sides of the array substrate 10 and the color film substrate 20, and partially located on a frame area between the array substrate 10 and the color film substrate 20. However, this is not limited in this application and specifically depends on a situation.

Based on any one of the foregoing embodiments, in an embodiment of this application, the display apparatus further includes a first securing structure 60 that is located on a side of the backlight module 50 and that securely connects the backlight module 50 and the array substrate. It should be noted that, in this embodiment of this application, the first securing structure 60 may cover only sides of the backlight module 50 and the array substrate, or may extend to cover a side of the color film substrate, to improve firmness between the backlight module, the array substrate, and the color film substrate.

Based on the foregoing embodiment, in an embodiment of this application, in a direction perpendicular to the color film substrate 20 and the array substrate 10, a projection of a part that is of the sealing structure 30 and that is located on the sides of the array substrate 10 and the color film substrate 20 at least partially overlaps a projection of the first securing structure 60. In this way, a space above the first securing structure 60 is partially utilized to narrow the black border area on the display apparatus, and reduce a size of a frame area on a housing 90 of the display apparatus.

Specifically, in an embodiment of this application, in the direction perpendicular to the color film substrate 20 and the array substrate 10, the projection of the first securing structure 60 completely covers the projection of the part that is of the sealing structure 30 and that is located on the sides of the array substrate 10 and the color film substrate 20. In this way, the space above the first securing structure 60 is fully utilized to narrow the black border area on the display apparatus without increasing the size of the frame area on the apparatus housing of the display apparatus.

In comparison with a conventional solution in which the sealing structure 30 is completely located between the array substrate 10 and the color film substrate 20, on the display apparatus provided in this embodiment of this application, at least a part of the sealing structure 30 is disposed by using the space above the first securing structure 60. This can reduce a width of the sealing structure 30 between the array substrate 10 and the color film substrate 20 by 50%, and narrow the black border area between the array substrate 10 and the color film substrate 20 by 33% while implementing a same bonding strength between the array substrate 10 and the color film substrate 20 without increasing a size of the apparatus housing 90.

Based on any one of the foregoing embodiments, in an embodiment of this application, still as shown in FIG. 3, the display apparatus further includes: a first polarizer 60 disposed between the array substrate 10 and the backlight module 50; a second polarizer 70 disposed on a side that is of the color film substrate 20 and that faces away from the array substrate 10; and a cover 80 disposed on a side that is of the second polarizer 70 and that faces away from the color film substrate 20. Specifically, the second polarizer 70 and the cover 80 are securely connected by a bonding adhesive 71; the first polarizer 60 and the array substrate 10 are securely connected by an optical clear adhesive; and the second polarizer 70 and the color film substrate 20 are securely connected by an optical clear adhesive, to reduce a probability that a bubble appears between the second polarizer and the color film substrate, reduce a probability that a bubble appears between the first polarizer and the array substrate, and improve display quality of the display apparatus. In addition, the display apparatus further includes: the apparatus housing 90 that forms a sealed space with the cover 80, where the sealed space is used to accommodate the backlight module 50, the array substrate 10, and the color film substrate 20; and a second securing structure 100 that securely connects the cover plate 80 and the apparatus housing 90. An air gap exists between the apparatus housing 90 and a side that is of the backlight module 50 and that faces away from the array substrate 10. It should be noted that, in this embodiment of this application, the air gap is used to avoid damage to a display module between the first polarizer 40 and the second polarizer 70 when the apparatus housing 90 deforms due to external force.

Based on the foregoing embodiment, in an embodiment of this application, as shown in FIG. 3, the second securing structure 100 is located between a side wall of the cover 80 and a side wall of the apparatus housing 90, and securely connects the side wall of the cover 80 and the side wall of the apparatus housing 90. In this embodiment of this application, a support structure 110 is disposed in the gap between the backlight module 50 and the apparatus housing 90, so that the gap is formed between the backlight module 50 and the apparatus housing 90 by using the support structure 110. However, this is not limited in this application. In another embodiment of this application, the gap between the backlight module 50 and the apparatus housing 90 may alternatively be formed in another manner, which specifically depends on a situation. Specifically, in an embodiment of this application, a foam adhesive is used as the support structure 110 to implement a support function and improve a bonding strength to some extent. However, this is not limited in this application and specifically depends on a situation.

In another embodiment of this application, as shown in FIG. 4, an end surface on a side that is of the apparatus housing 90 and that faces the cover 80 is a surface of a step. The second securing structure 100 is located at the step, and securely connects the cover 80 and the apparatus housing 90, so that the second securing structure 100 is further used to lift the apparatus housing 90 while the second securing structure 100 is used to secure the cover 80 and the apparatus housing 90. In this way, the gap is formed between the backlight module 50 and the apparatus housing 90. However, this is not limited in this application and specifically depends on a situation. It should be noted that, in this embodiment of this application, another gap exists between the apparatus housing 90 and the part that is of the sealing structure 30 and that is located on the sides of the array substrate 10 and the color film substrate 20, to avoid damage to the display module when the side wall of the apparatus housing 90 deforms due to external force.

Correspondingly, this embodiment of this application further provides a display apparatus manufacturing method. In an example in which the sealing structure 30 is partially located on the sides of the array substrate 10 and the color film substrate 20, and partially located between the array substrate 10 and the color film substrate 20, the manufacturing method in this embodiment of this application includes the following steps.

S201-S203. Steps S201 to S203 are similar to steps S101 and S103. Details are not described herein again.

S204. Form a third frame sealant on sides of the backlight module 50 and the array substrate 10, and cure the third frame sealant to form a first securing structure 60 for securely connecting the array substrate 10 and the backlight module 50. It should be noted that, in this embodiment of this application, the first securing structure 60 may be located only on the sides of the array substrate 10 and the backlight module 50, or may extend to a side of the color film substrate 20. However, this is not limited in this application and specifically depends on a situation.

Based on the foregoing embodiment, in an embodiment of this application, the manufacturing method further includes the following steps before step S204:
S205. Secure a first polarizer 40 to a side that is of the array substrate 10 and that faces away from the color film substrate 20. Specifically, the first polarizer 40 and the array substrate 10 are secured in a flat adhesive bonding manner, to reduce a probability that a bubble appears between the first polarizer and the array substrate 10, and improve display quality.
S206. Secure a second polarizer 70 to a side that is of the color film substrate 20 and that faces away from the array substrate 10. Specifically, the second polarizer 70 and the color film substrate 20 are secured in the flat adhesive bonding manner, to reduce a probability that a bubble appears between the second polarizer and the color film substrate, and improve the display quality.
S207. Secure a cover 80 to a side that is of the second polarizer 70 and that faces away from the color film substrate 20, to form a display module.
S208. Use a second securing structure 100 to securely connect the cover 80 and an apparatus housing 90, where the apparatus housing 90 and the cover 80 form a sealed space, the sealed space is used to accommodate the backlight module 50, the array substrate 10, and the color film substrate 20, and an air gap exists between the apparatus housing 90 and a side that is of the backlight module 50 and that faces away from the array substrate 10.

Based on the foregoing embodiment, in an embodiment of this application, the second securing structure 100 is located between a side wall of the cover 80 and a side wall of the apparatus housing 90, and securely connects the side wall of the cover 80 and the side wall of the apparatus housing 90. In this embodiment, the using a second securing structure 100 to securely connect the cover 80 and an apparatus housing 90 includes: forming a fourth frame sealant on a side wall that is of the apparatus housing 90 and that faces the cover 80 and/or a side wall that is of the cover 80 and that faces the apparatus housing 90, and curing the fourth frame sealant to form the second securing structure 100, thereby securely connecting the cover 80 and the apparatus housing 90.

Based on the foregoing embodiment, in an embodiment of this application, before the using a second securing structure 100 to securely connect the cover 80 and an apparatus housing 90, the method further includes:
forming a support structure 110 on a side that is of the backlight module 50 and that faces away from the first polarizer 40, so that a gap is formed between the backlight module 50 and the apparatus housing 90 by using the support structure 110 after the cover 80 and the apparatus housing 90 are securely connected. However, this is not limited in this application. In another embodiment of this application, the gap between the backlight module 50 and the apparatus housing 90 may alternatively be formed in another manner, which specifically depends on a situation.

In another embodiment of this application, an end surface on a side that is of the apparatus housing 90 and that faces the cover 80 is a surface of a step. The second securing structure 100 is located at the step, and securely connects the cover 80 and the apparatus housing 90, so that the second securing structure 100 is further used to lift the apparatus housing 90 while the second securing structure 100 is used to secure the cover 80 and the apparatus housing 90. In this way, the gap is formed between the backlight module 50 and the apparatus housing 90. In this embodiment of this application, the using a second securing structure 100 to securely connect the cover 80 and an apparatus housing 90 includes: forming a fourth frame sealant on the surface of the step at a side that is of the apparatus housing 90 and that faces the cover 80, and curing the fourth frame sealant to form the second securing structure 100, thereby securely connecting the cover 80 and the apparatus housing 90. However, this is not limited in this application and specifically depends on a situation. It should be noted that, in this embodiment of this application, another gap exists between the apparatus housing 90 and the part that is of the sealing structure 30 and that is located on the sides of the array substrate 10 and the color film substrate 20, to avoid damage to the display module between the first polarizer 40 and the second polarizer 70 when the side wall of the apparatus housing 90 deforms due to external force.

It should be noted that, the display apparatus provided in this embodiment of this application may be applied to a terminal such as a mobile phone, a tablet, a band, or a watch. This is not limited in this application and depends on a situation.

Correspondingly, an embodiment of this application further provides a terminal including the display apparatus provided in any one of the foregoing embodiments. The terminal may be a device such as a mobile phone, a tablet, a band, or a watch.

In conclusion, according to the terminal and the display apparatus and the manufacturing method thereof that are provided in the embodiments of this application, the sealing structure 30 sealing the liquid crystal molecules is at least partially disposed on the sides of the array substrate 10 and the color film substrate 20, to reduce the area of the sealing structure 30 between the array substrate 10 and the color film substrate 20 while ensuring the sealability of the sealing structure 30. In this way, the black border area between the array substrate 10 and the color film substrate 20 is narrowed while ensuring the sealability of the sealing structure 30, thereby implementing a narrow frame, and increasing the area of the display area on the display apparatus of the same size.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display panel, comprising:
an array substrate and a color film substrate that are disposed opposite to each other;
liquid crystal molecules located between the array substrate and the color film substrate; and
a sealing structure sealing the liquid crystal molecules, wherein the sealing structure is at least partially located on sides of the array substrate and the color film substrate.

2. The display panel according to claim 1, wherein the sealing structure is located only on the sides of the array substrate and the color film substrate; or the sealing structure is partially located on the sides of the array substrate and the color film substrate, and partially located on a frame area between the array substrate and the color film substrate.

3. A display apparatus, comprising:
an array substrate and a color film substrate that are disposed opposite to each other;
liquid crystal molecules located between the array substrate and the color film substrate;
a sealing structure sealing the liquid crystal molecules, wherein the sealing structure is at least partially located on sides of the array substrate and the color film substrate; and
a backlight module located on a side that is of the array substrate and that faces away from the color film substrate.

4. The display apparatus according to claim 3, wherein the sealing structure is located only on the sides of the array substrate and the color film substrate; or the sealing structure is partially located on the sides of the array substrate and the color film substrate, and partially located on a frame area between the array substrate and the color film substrate.

5. The display apparatus according to claim 3 or 4, further comprising:
a first securing structure that is located on a side of the backlight module and that securely connects the backlight module and the array substrate.

6. The display apparatus according to claim 5, wherein in a direction perpendicular to the color film substrate and the array substrate, a projection of a part that is of the sealing structure and that is located on the sides of the array substrate and the color film substrate at least partially overlaps a projection of the first securing structure.

7. The display apparatus according to claim 6, wherein in a direction parallel to the color film substrate and the array substrate, the projection of the first securing structure completely covers the projection of the part that is of the sealing structure and that is located on the sides of the array substrate and the color film substrate.

8. The display apparatus according to any one of claims 3 to 7, wherein the display apparatus further comprises:
a first polarizer disposed between the array substrate and the backlight module, a second polarizer disposed on a side that is of the color film substrate and that faces away from the array substrate, a cover disposed on a side that is of the second polarizer and that faces away from the color film substrate, an apparatus housing that forms a sealed space with the cover, and a second securing structure that securely connects the cover and the apparatus housing, wherein
the sealed space is used to accommodate the backlight module, the array substrate, and the color film substrate, and an air gap exists between the apparatus housing and a side that is of the backlight module and that faces away from the array substrate.

9. The display apparatus according to claim 8, wherein the second securing structure is located between a side wall of the cover and a side wall of the apparatus housing, and securely connects the side wall of the cover and the side wall of the apparatus housing.

10. The display apparatus according to claim 9, wherein a support structure is disposed in the gap between the backlight module and the apparatus housing.

11. The display apparatus according to claim 8, wherein an end surface on a side that is of the apparatus housing and that faces the cover is a surface of a step; and the second securing structure is located at the step, and securely connects the cover and the apparatus housing.

12. A terminal, comprising the display apparatus according to any one of claims 3 to 11.

13. A display panel manufacturing method, wherein the method comprises:
forming a first frame sealant on a frame area of an array substrate and/or a frame area of a color film substrate before bonding the array substrate and the color film substrate;
bonding the array substrate and the color film substrate on a side on which the first frame sealant is formed, and curing the first frame sealant to form a part that is of the sealing structure and that is located between the array substrate and the color film substrate; and
forming a second frame sealant on sides of the array substrate and the color film substrate, and curing the second frame sealant to form a part that is of the sealing structure and that is located on the sides of the array substrate and the color film substrate.
